# FASCICULE DE BREVET EUROPEEN

(11) **EP 0 424 830 B1**
(45) Date de publication et mention de la délivrance du brevet: **06.04.1994**
(21) Numéro de dépôt: 90120133.5
(22) Date de dépôt: 19.10.1990
(51) Int. Cl.: G01M 3/20

(54) **Système de détection de fuites à gaz traceur**
System zur Aufspürung von Undichtigkeit unter Verwendung von Trägergas
Leak detecting system using tracer gas

(30) Priorité: 23.10.1989 FR 8913827
(43) Date de publication de la demande: 02.05.1991
(73) Titulaire: ALCATEL CIT, 75008 Paris (FR)
(72) Inventeur: Tallon, Jacques, F-74000 Annecy (FR); Baret, Gilles, F-74000 Annecy (FR)
(74) Mandataire: Weinmiller, Jürgen

(56) Documents cités:
- EP-A- 0 283 543
- FR-A- 2 606 509
- PATENT ABSTRACTS OF JAPAN, vol. 7, no. 15 (P-169)[1160], 21 janvier 1983; & JP-A-57 169 647
- IRE TRANSACTIONS ON ELECTRON DEVICES, vol. ED5, no. 1, janvier 1981, pages 28-34; J.L. LINEWEAVER: "Leak detection - ultrasensitive techniques employing the helium leak detector"

## Description

La présente invention concerne un système de détection de fuite à gaz traceur comportant une conduite munie d'une vanne de prévidage et permettant de relier une enceinte à tester à l'aspiration d'une pompe de prévidage, un analyseur de gaz relié à l'aspiration d'une pompe secondaire mécanique dont le refoulement est relié, par une canalisation à une pompe primaire, une liaison munie d'une vanne d'entrée reliant ladite enceinte à l'aspiration de ladite pompe secondaire mécanique.

Un tel système de détection de fuite est décrit dans le document FR-A-2 606 509.

Dans un tel système, avant d'effectuer le test de contrôle d'étanchéité, on effectue le prévidage de l'enceinte à tester au moyen de la pompe de prévidage. Par ailleurs, la vanne d'entrée est une vanne d'étranglement.

Avec un tel système, le prévidage de la pièce à tester est long lorsque cette pièce est d'un gros volume. En effet, au dessous de 10⁻¹ mbar, le débit de la pompe primaire à palettes est relativement faible. Or, on ne peut ouvrir la vanne d'entrée qu'après que la pression soit descendue au moins à 10⁻² mbar et à partir de ce moment seulement on peut commencer à ouvrir la vanne d'entrée qui est une vanne d'étranglement que l'on ouvre petit à petit, ce qui ne permet pas d'obtenir un temps de réponse rapide.

Par ailleurs, pendant toute la durée du prévidage de l'enceinte en régime moléculaire, qui peut être longue, il y a un risque de pollution de l'enceinte par l'huile de la pompe primaire.

Dans les montages à pompe primaire unique, il existe un phénomène de mémoire d'hélium dû à la pompe primaire à palettes lorsqu'une fuite importante a été décelée lors d'un essai antérieur. Ce phénomène perturbe les résultats de l'essai suivant.

La présente invention a pour but de proposer un système de détection de fuite tel que ci-dessus, fonctionnant selon le cas classique dit en "passage direct", permettant une sensibilité maximale, par opposition au fonctionnement appelé en "contre-courant", ayant un temps de réponse minimal, permettant d'avoir une vanne d'entrée de grande conductance s'ouvrant immédiatement dès que l'on passe en fonctionnement de test après le prévidage de la pièce. L'invention pallie en outre les inconvénients cités ci-dessus, et a pour avantage complémentaire de diminuer le bruit de fond qui existe dans ce système de détection.

L'invention a ainsi pour objet un système de détection de fuite à gaz traceur tel que défini plus haut, caractérisé en ce qu'il comporte en outre une seconde pompe secondaire mécanique située sur ladite conduite, en aval de ladite vanne de prévidage.

On va maintenant donner deux exemples de mise en oeuvre de l'invention en se référant au dessin annexé dans lequel :
La figure 1 représente un système de détection de fuite à gaz traceur selon l'invention dans le cas où l'on utilise deux pompes à palettes distinctes.
La figure 2 représente un système de détection selon l'invention dans le cas où l'on n'utilise qu'une seule pompe à palettes.

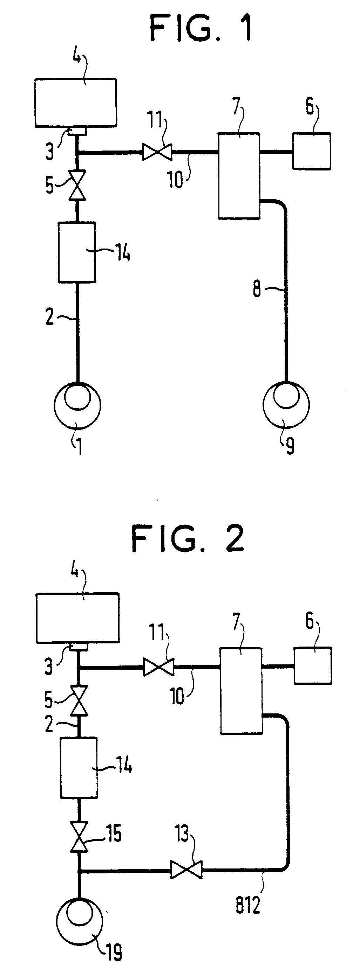

En se référant à la figure 1, le système de détection de fuite à gaz traceur comprend une pompe de prévidage 1, par exemple une pompe à palettes. Cette pompe à palettes 1 est reliée par son aspiration à une conduite 2 dont l'autre extrémité est reliée par une bride d'entrée 3 à une enceinte à tester 4. Cette conduite 2 est munie d'une vanne de prévidage 5. Un analyseur de gaz 6, tel qu'un spectromètre de masse réglé par exemple sur l'hélium, est relié à l'aspiration d'une pompe secondaire mécanique 7. Il s'agit d'une pompe moléculaire du type turbomoléculaire par exemple, mais on peut également utiliser d'autres types de pompes par exemple une pompe Holweck ou une pompe hybride.

Le refoulement de la pompe secondaire 7 est relié par une canalisation 8 à une pompe primaire 9 telle qu'une pompe à palettes.

L'enceinte à tester 4 est en outre reliée à l'aspiration de la pompe secondaire 7 par une liaison 10 munie d'une vanne d'entrée 11.

Selon l'invention, une seconde pompe secondaire mécanique 14 est située sur la conduite 2, en aval de la vanne de prévidage 5.

Grâce à cette pompe mécanique secondaire 14, par exemple une pompe moléculaire du type turbomoléculaire, on abaisse rapidement la pression d'entrée en profitant de la grande vitesse de pompage de la pompe moléculaire au dessous de 10⁻¹ mbar contrairement à la pompe à palettes à ces pressions.

On atteint ainsi une pression limite, de l'ordre de 10⁻⁵ mbar, très inférieure donc aux 10⁻² mbar atteint précédemment dans l'art antérieur. La vanne d'entrée 11 peut donc être une vanne de grande conductance qui est immédiatement ouverte complètement dès que l'on passe en phase de test. Le temps de réponse est donc très bref. Par ailleurs, on a une meilleure élimination, au cours de la phase de prévidage, de l'hélium contenu dans l'air, on diminue ainsi le bruit de fond.

Un autre avantage consiste encore en ce que cette pompe 14 empêche la rétrodiffusion d'huile de la pompe 1 d'où la réalisation d'un détecteur propre.

Enfin, le phénomène de mémoire d'hélium dû à la pompe 1 est réduit par cette pompe 14.

A titre d'exemple, les pompes 7 et 14 sont des pompes turbomoléculaires ayant un débit de 100 l/s. La pompe 9 est une pompe à palettes ayant un débit de 4 m³/h et la pompe de prévidage 1 un débit de 20 m³/h.

Au cours d'un test, une fois le prévidage effectué par les pompes 1 et 14, on ferme les vannes 5 et 13 et on ouvre la vanne 11. On obtient une sensibilité maximale de 10⁻⁸ mbar cm³/s (10⁻¹¹ atm cm³/s) avec une vitesse de pompage de 8 l/s.

La figure 2 représente un montage simplifié dans lequel on a supprimé une pompe à palettes, la seule pompe à palettes, repérée 19 jouant en effet le rôle des deux pompes 1 et 9 de la figure 1. Il a alors été ajouté une vanne supplémentaire 15.

Au cours du prévidage, les vannes 5 et 15 sont ouvertes et les vannes 11 et 13 fermées.

Au cours d'un test, on ferme les vannes 5 et 15 et on ouvre les vannes 11 et 13.

Ce schéma permet en outre un fonctionnement en contre-courant, la vanne 11 reste fermée et les trois vannes 5, 15 et 13 sont ouvertes.

Dans cette figure 2, la pompe à palettes 19 utilisée a un débit correspondant à la pompe 1 de la figure 1, donc à 20 m³/h dans l'exemple non limitatif cité.

Ainsi, grâce à ce système de détection, on dispose maintenant d'appareils ayant des performances meilleures que celles des meilleurs appareils à pompe à diffusion avec piège à azote liquide. Performances qui n'étaient pas atteintes jusqu'à maintenant avec les appareils à pompes moléculaires mécaniques dans les schémas de montage utilisés.

On obtient en effet :
- une grande sensibilité :10⁻⁸ mbar cm³/s (10⁻¹¹ atm cm³/s),
- une grande vitesse de pompage : 8 l/s,
- système de détection propre,
- mémoire hélium réduite.

Dans tout le texte, on a parlé de système de détection plutôt que de détecteur car, en effet, l'invention s'applique à tout système de détection comportant les composants décrits, l'ensemble de ces composants pouvant être regroupé dans un appareil appelé détecteur, mais cet appareil peut éventuellement, dans certains cas, ne regrouper qu'une partie des composants, ce qui permet de réaliser des détecteurs plus petits et plus légers, si par exemple le volume à contrôler possède son propre groupe de pompage.

## Revendications

1. Système de détection de fuite à gaz traceur comportant une conduite (2), munie d'une vanne de prévidage (5) et permettant de relier une enceinte à tester (4) à l'aspiration d'une pompe de prévidage (1, 19), un analyseur de gaz (6) relié à l'aspiration d'une pompe secondaire mécanique dont le refoulement est relié par une canalisation (8, 812) à une pompe primaire (9, 19), une liaison (10) munie d'une vanne d'entrée (11) reliant ladite enceinte (4) à l'aspiration de ladite pompe secondaire mécanique (7), caractérisé en ce qu'il comporte en outre une seconde pompe secondaire mécanique (14) située sur ladite conduite (2) en aval de ladite vanne de prévidage (5).

## Claims

1. A tracer gas leak detection system comprising: a first duct (2) provided with a pre-evacuation valve (5) and enabling a test chamber (4) to be connected to the suction of a pre-evacuation pump (1, 19); a gas analyzer (6) connected to the suction of a mechanical secondary pump whose delivery is connected by a second duct (8, 812) to a primary pump (9, 19); and a connection (10) provided with an inlet valve (11) connecting said chamber (4) to said mechanical secondary suction pump (7), the system being characterized in that it further includes a second mechanical secondary pump (14) situated on said first duct (2), upstream from said pre-evacuation valve (5).

## Patentansprüche

1. System zur Erfassung von Lecks mittels Spürgas, das eine Leitung (2) mit einem Vorevakuierventil (5) aufweist und es erlaubt, einem zu prüfenden Raum (4) mit der Ansaugseite einer Vorevakuierpumpe (1, 9) zu verbinden, sowie einen Gasanalysator (6), der mit der Saugseite einer mechanischen Sekundärpumpe verbunden ist, deren Ausstoßseite (8, 812) über eine Leitung mit einer Primärpumpe (9, 19) verbunden ist, und eine Verbindung (10) aufweist, die ein Eingangsventil (11) aufweist, das den Raum (4) mit der Saugseite der mechanischen Sekundärpumpe (7) verbindet, dadurch gekennzeichnet, daß es weiter eine zweite mechanische Sekundärpumpe (14) aufweist, die sich in dieser Leitung (2) hinter dem Vorevakuierventil (5) befindet.
